(19) Europäisches Patentamt

European Patent Office

Office européen des brevets

(11) **EP 0 820 033 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **G06K 15/02**, B41J 3/407

(21) Anmeldenummer: **96111707.4**

(22) Anmeldetag: **19.07.1996**

(54) **Banddruckgerät**

Tape printer

Imprimante de rubans

(84) Benannte Vertragsstaaten:
**DE FR GB**

(43) Veröffentlichungstag der Anmeldung:
**21.01.1998 Patentblatt 1998/04**

(73) Patentinhaber: **Esselte**
**9100 St. Niklaas (BE)**

(72) Erfinder:
• **Hastings, Nicholas James**
**Cambridge CB4 4UL (GB)**
• **Howe, Geoffrey Stuart**
**Newcastle Upon Tyen NE12 9DD (GB)**

(74) Vertreter: **Kutzenberger, Helga, Dr.**
**Kutzenberger & Wolff**
**Theodor-Heuss-Ring 23**
**50668 Köln (DE)**

(56) Entgegenhaltungen:
**EP-A- 0 534 799          EP-A- 0 639 022**
**WO-A-90/09629**

• **PATENT ABSTRACTS OF JAPAN vol. 96, no. 001 & JP-A-08 001985 (TEC CORP), 9.Januar 1996,**

**Beschreibung**

Die vorliegende Erfindung bezieht sich auf Banddruckgeräte und im speziellen auf die Steuerung der Geschwindigkeit des Aufzeichnungsmediums während des Druckens.

Bekannte Banddruckgeräte des Typs, mit dem sich die vorliegende Erfindung befaßt, sind in der EP-A-0 322 918 und EP-A-0 322 919 (Brother KK) und EP-A-0 267 890 (Varitonic) offenbart. Die Drucker enthalten eine Druckeinrichtung, die einen Kassettenaufnahmeraum zur Aufnahme einer Kassette oder eines Bandhalterungsgehäuses hat. In der EP-A-0 267 890 enthält das Bandhalterungsgehäuse ein Farbband und ein Substratband, wobei letzteres eine obere Bildempfangsschicht umfaßt, die durch Klebstoff an einer Rückseitenschicht befestigt ist. In der EP-A-0 322 918 und EP-A-0 322 919 enthält das Bandhalterungsgehäuse ein Farbband, ein transparentes Bildempfangsband und ein doppelseitiges Klebeband, welches mit einer seiner klebrigen Flächen auf das Bildempfangsband nach dem Drucken aufgebracht wird, und welches an der gegenüberliegenden Fläche ein abziehbares Rückseitenpapier aufweist. Bei allen diesen Geräten ist das Bildübertragungsmedium (Farbband) und ein Bildempfangsband (Substrat) in derselben Kassette enthalten.

Die Anmelderin hat einen anderen Typ von Banddruckgerät entwickelt, der z.B. in EP-A-0 578 372 beschrieben ist. Bei diesem Druckgerät ist das Substratband ähnlich zu dem in EP-A-0 267 890 beschriebenen, jedoch in einem eigenen Gehäuse enthalten, während das Farbband analog in einem zugeordneten Gehäuse angeordnet ist.

In allen diesen Fällen wird das Bildempfangsband in Überlappung mit dem Farbband durch eine Druckzone geführt, die aus einem festen Druckkopf und einer Gegendruckwalze besteht, gegen die der Druckkopf gepreßt werden kann, um ein Bild vom Farbband auf das Bildempfangsband zu übertragen. Dieses kann auf verschiedene Arten geschehen, u.a. durch Trockenbeschriftung oder Trockenfilmabdruck, aber gegenwärtig ist der gebräuchlichste Weg das Thermodruckverfahren, bei dem der Druckkopf aufgeheizt wird und die Wärme bewirkt, daß Tinte vom Farbband auf das Bildempfangsband übertragen wird. Alternativ kann der Druckkopf in direktem Kontakt mit einem thermisch sensitiven Bildempfangsband stehen, wobei durch Aufheizen des Druckkopfes ein Bild auf dem Bildempfangsband entsteht.

Die EP-A-0 317 241 offenbart ein Tintenstrahlaufzeichnungsgerät, in dem der Aufzeichnungsträger mittels eines Gleichstrommotors transportiert wird. Um zu vermeiden, daß der Motor wegen fehlender auszudruckender Bilddaten stehenbleiben muß, was eine mangelhafte Druckqualität zur Folge hätte, wird vorgeschlagen, die Geschwindigkeit des Motors abhängig von der Geschwindigkeit der Datenübertragung von einem Computer (Host) zu steuern.

Ein Nachteil der bekannten Banddruckgeräte besteht in ihrer konstanten Druckgeschwindigkeit, so daß der Druckprozeß aufgrund fehlender auszudruckender Bilddaten, die von einem angeschlossenen Host erwartet werden, unterbrochen werden kann. Weiterhin benötigen die konventionellen Banddruckgeräte eine relativ leistungsstarke und teure Stromversorgung, da letztere in der Lage sein muß, den gesamten Druckkopf mit Energie zu versorgen, sogar wenn eine vollständige Punktreihe auszudrucken ist.

Die WO90/09629 offenbart ein Verfahren zum Umrechnen, Darstellen und Drucken von Schriftfonts und Bildern auf einem spaltenorientierten Drucker oder Anzeigegerät, beispielsweise einem Banddrucker. Das Verfahren ermöglicht das Umrechnen der Druckdaten in Bildpunkte in Echtzeit.

Die EP-A-639 022 offenbart eine Druckvorrichtung mit einem Druckkopf, beispielsweise ein Fernkopiergerät. In Abhängigkeit des verfügbaren Speichervolumens des Pufferspeichers des Druckkopfes wird die Geschwindigkeit des Druckkopfes erhöht, je mehr Daten im Pufferspeicher gespeichert sind, um einen Überlauf des Speichers zu vermeiden. Der Druckkopf weist Rechenmittel auf, um die zu druckende Zeile so zu speichern und die Druckgeschwindigkeit so zu steuern, dass eine Verschlechterung der Druckqualität bei erhöhter Empfangsgeschwindigkeit bess er vermieden wird.

Es ist eine Aufgabe der vorliegenden Erfindung, ein Banddruckgerät zu schaffen, das die Nachteile des Standes der Technik vermeidet.

Erfindungsgemäß wird die Aufgabe gelöst durch ein Banddruckgerät gemäß Anspruch 1.

Die grundlegende Idee der Erfindung besteht darin, die Geschwindigkeit der Antriebseinrichtung als Funktion zweier Parameter zu steuern: Die Anzahl der zum Ausdrucken verfügbaren Bilddaten und die Anzahl der zu aktivierenden Druckelemente, d.h. die im jeweiligen Druckzyklus auf dem Band zu erzeugenden Punkte. Dieses erlaubt eine optimale Anpassang der Druckgeschwindigkeit, so dass einerseits jegliche ungewünschte Unterbrechung der Bewegung des Bandes aufgrund fehlender auszudruckender Daten vermieden werden kann, und dass andererseits die Stromversorgung kleiner und preiswerter wählbar ist, da die Druckgeschwindigkeit vermindert ist, falls ein hoher Anteil der Druckelemente zu aktivieren ist, so dass die Zeit zwischen zwei aufeinanderfolgenden Druckzyklen länger und die benötigte Durchschnittsleistung daher geringer ist.

Obwohl unterschiedliche Möglichkeiten für einen Zusammenhang zwischen der Druckgeschwindigkeit einerseits und der Anzahl der Bilddaten und der Anzahl der zu aktivierenden Druckelemente andererseits existieren, ist vorgeschlagen, dass die Geschwindigkeitsanpassungsmittel eine erste Sollgeschwindigkeit, die von der Anzahl der in den Speichermitteln gespeicherten Bilddaten abhängt, sowie eine zweite Sollgeschwindigkeit, die von der Anzahl der im jeweiligen Druckzyklus zu aktivierenden Druckelemente abhängt, bestimmen. Die Geschwindigkeit der Antriebseinrichtung wird dann entsprechend der kleinsten der beiden Sollgeschwindigkeiten gesteuert. Das ist ein relativ einfaches Verfahren und schnell ausführbar. Weiterhin ist sichergestellt, daß die größtmögliche Druckgeschwindigkeit verwendet wird, solange keine Verminderung notwendig ist.

Weitere vorteilhafte Ausführungsformen der Erfindung sind in den Unteransprüchen wiedergegeben.

Es ist vorgeschlagen, die den Aufzeichnungsmitteln zugeführte Energie in Abhängigkeit von der Geschwindigkeit der Antriebseinrichtung zu steuern. Das kann wie in der EP-A-0 575 773 durchgeführt werden.

In einer anderen bevorzugten Ausführungsform ist das Banddruckgerät mit Mitteln zum Einschalten der Stromversorgung versehen, die die Stromversorgung aktivieren, sobald Daten von einem Host eintreffen und unabhängig vom Stromversorgungsschalter des Banddruckgeräts sind. Diese Ausführungsform ist sehr benutzerfreundlich, da der Benutzer nicht jedesmal das Banddruckgerät einzuschalten braucht, wenn er ein Etikett auszudrucken wünscht. Dieselben Mittel können weiterhin die Strmoversorgung ausschalten, wenn innerhalb einer festgelegten Zeitspanne keine Daten mehr vom Host eingetroffen sind. Es ist anzumerken, daß die Mittel zum Ein- und Ausschalten der Stromversorgung eine unabhängige Stromversorgung erfordern.

Schließlich wird vorgeschlagen, das Banddruckgerät mit Fehlererkennungsmitteln für die Bewegung des Bildempfangsbandes und/oder eines Farbbandes auszustatten. Entsprechende Fehlermeldungen können zum Host gesandt und/oder auf einer Anzeigevorrichtung des Banddruckgeräts wiedergegeben werden. Die Bewegung des Bandes und/oder Farbbandes kann mittels eines Mikroschalters untersucht werden, der mit einem Nocken wechselwirkt, der mit einer Bandabwickelspule operativ verbunden ist. Alternativ oder zusätzlich kann ein operativ mit einer Farbbandabwickelspule und/oder ein operativ mit einer Farbbandaufwickelspule verbundener Nocken verwendet werden.

Für ein besseres Verständnis der vorliegenden Erfindung und um aufzuzeigen, wie dieselbe realisierbar ist, wird im folgenden auf die Zeichnungen Bezug genommen, in denen Ausführungsformen der Erfindung dargestellt. Es zeigen:

Figur 1: Eine Ansicht eines ersten Banddruckgerätes, das die vorliegende Erfindung unter Verwendung eines Zwei-Kassetten-Systemes verkörpert;

Figur 2: Ein Blockdiagramm einer Ausführungsform eines Banddruckgerätes;

Figur 3: Ein Beispiel für eine Beziehung zwischen dem Inhalt des Speichers und der ersten Sollgeschwindigkeit;

Figur 4: Ein Beispiel für eine Beziehung zwischen einem Wert V und der zweiten Sollgeschwindigkeit.

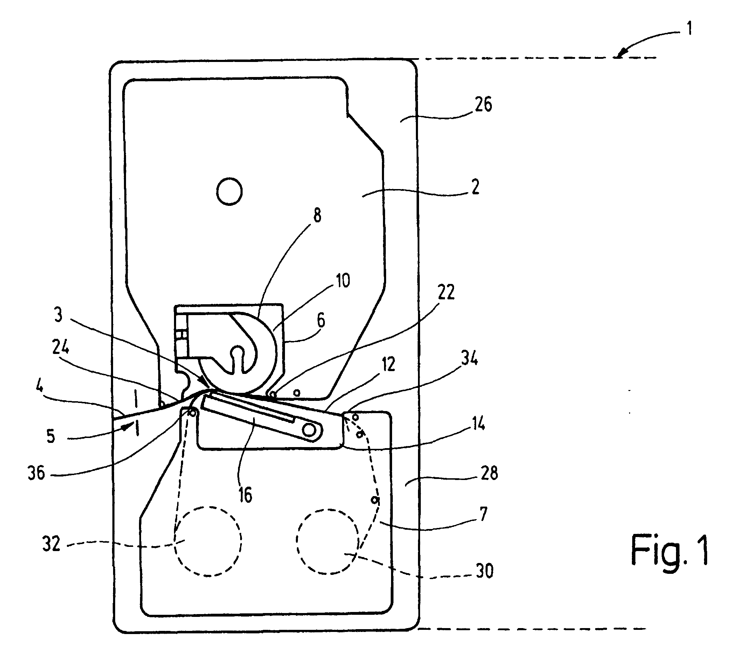

Figur 1 zeigt die Ansicht eines Banddruckgerätes 1, in dem die vorliegende Erfindung verwendet wird und das zwei darin angeordnete Kassetten enthält. Dieses Banddruckgerät 1 ist typischerweise ein handgehaltenes oder ein kleines Tischgerät. Die obere Kassette 2 ist in einem ersten Kassettenempfangsabschnitt 26 angeordnet und enthält einen Vorrat an Bildempfangsband 4, das durch die Druckzone 3 des Banddruckgerätes 1 zu einem Auslaß 5 des Banddruckgerätes 1 geführt wird. Das Bildempfangsband 4 umfaßt eine obere Schicht zum Empfang eines gedruckten Bildes auf einer seiner Oberflächen, während seine andere Oberfläche mit einer adhäsiven Schicht beschichtet ist, auf die eine abziehbare Rückseitenschicht aufgebracht ist. Die obere Kassette 2 hat einen Einschnitt 6 zur Aufnahme einer Druckwalze 8 des Banddruckgerätes 1, und Führungsabschnitte 22, 24 zum Führen des Bandes 4 durch die Druckzone 3. Die Druckwalze 8 ist innerhalb eines Gußkäfigs 10 drehbar angeordnet. Alternativ kann die Druckwalze 8 drehbar auf einem Stift angeordnet sein.

Die untere Kassette 11 ist innerhalb eines zweiten Kassettenempfangsabschnitts 28 angeordnet und enthält ein Thermotransferfarbband 12, das sich von einer Vorratsspule 30 bis zu einer Aufwickelspule 32 innerhalb der Kassette 11 erstreckt. Das Thermotransferband 12 erstreckt sich durch die Druckzone 3 in Überlappung mit dem Bildempfangsband 4. Die Kassette 11 hat einen Einschnitt 14 zur Aufnahme eines Druckkopfes 16 des Banddruckgerätes 1 und Führungsabschnitte 34, 36 zum Führen des Thermotransferfarbbandes 12 durch die Druckzone 3. Der Druckkopf 16 ist zwischen einer Betriebsstellung, die in Figur 1 dargestellt ist, in dem er in Kontakt mit der Druckwalze 8 ist und das Thermotransferfarbband 12 und das Bildempfangsband 4 in Überlappung zwischen dem Druckkopf 16 und der Druckwalze 8 hält, und einer Außerbetriebsstellung, in der er von der Druckwalze 8 weg bewegt ist, um das Thermotransferfarbband 12 und Bildempfangsband 4 freizusetzen, beweglich. In der Betriebsstellung wird die Druckwalze 8 rotativ angetrieben, um das Bildempfangsband 4 entlang des Druckkopfes 16 zu transportieren, während der Druckkopf 16 angesteuert wird, ein Bild auf das Bildempfangsband 4 durch thermische Übertragung der Tinte des Farbbandes 12 auf das Bildempfangsband 4 zu drucken. Der Druckkopf 16 wird später genauer beschrieben, umfaßt im allgemeinen jedoch einen Thermodruckkopf mit einer Reihe von Druckelementen, die entsprechend des gewünschten, auszudruckenden Bildes thermisch aktivierbar sind.

Das Banddruckgerät 1 hat einen Deckel, der nicht dargestellt ist, jedoch schwenkbar an der Rückseite der Kassettenaufnahmeabschnitte 26 und 28 befestigt ist und der beide Kassetten in geschlossenem Zustand überdeckt.

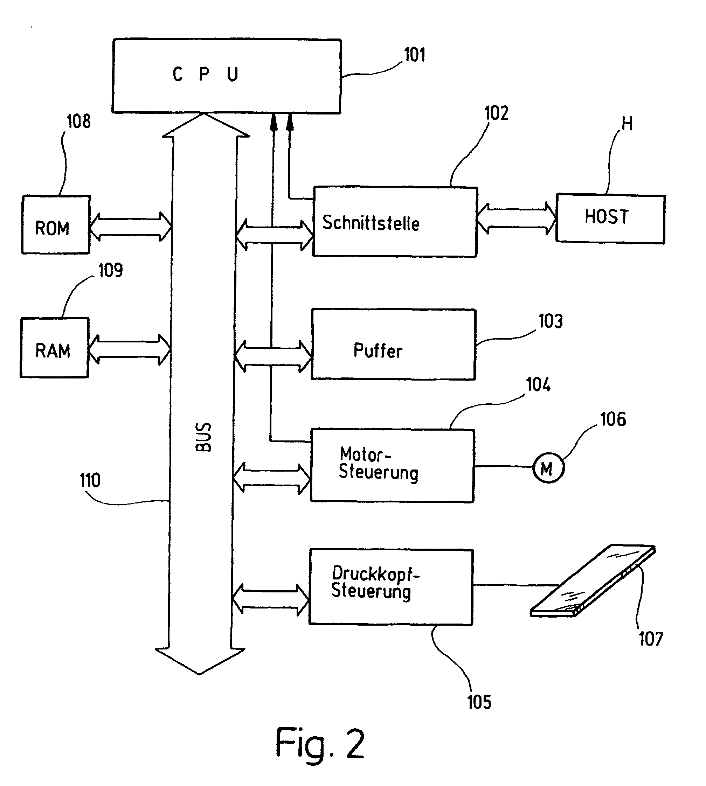

Ein Gleichstrommotor 106 (siehe Figur 2) treibt die Druckwalze 8 kontinuierlich an. Die Druckwalze 8 ist derart angeordnet, daß sie das Bildempfangsband 4 durch die Druckzone 3 durch die Anwendung ihres Drehmomentes kontinuierlich transportiert. Hier wird auf unsere europäische Patentanmeldung EP 652111 verwiesen, die die Steuerung des Gleichstrommotors beschreibt .

Figur 2 zeigt eine Ausführungsform einer Steuerschaltung gemäß der vorliegenden Erfindung. In Figur 2 gibt das Bezugszeichen 101 eine CPU, die z.B ein Mikroprozessor sein kann, wieder, die alle Teile des Druckers steuert. Eine Schnittstelle 102 dient zur Steuerung des Empfangs und der Übertragung von Daten, die sich auf Aufzeichnungs- (Bild-) Daten und Steuerbefehle beziehen, zwischen dem Drucker 1 und einem externen Host H. Ein Pufferspeicher 103 dient zur temporären Speicherung von Bilddaten, die vom Host H übertragen wurden. Eine Motorsteuerung 104 steuert die Fördergeschwindigkeit des bandartigen Aufzeichnungsträgers und gibt Signale ab, um die CPU 101 und die Druckkopfsteuerung 105 zu steuern, so daß die Aufzeichnungszeitpunkte entsprechend der Fördergeschwindigkeit steuerbar sind. Der Gleichstrommotor 106 wird mittels der Motorsteuerung 104 gesteuert. Die Welle des Gleichstrommotors 106 ist weiterhin mit einem (nicht dargestellten) Kodierer versehen, die der CPU eine Steuerung der Geschwindigkeit des Antriebs des Bandes erlaubt. Die Geschwindigkeit kann zwischen zwei Grenzen von beispielsweise 5mm/s und 20 mm/s variierbar sein. Der Kodierer wird außerdem zur Synchronisierung der Aktivierungssignale des Druckkopfs verwendet, um sicherzustellen, daß benachbarte Druckzeilen durch einen konstanten Abstand voneinander getrennt sind.

Ein Steuerprogramm wird verwendet, um die Geschwindigkeit des Motors 106 und somit des Bandes auf dem geforderten Wert zu halten. Dabei findet eine Pulsweitenmodulation (PWM) des Motortreibertransistors Verwendung. Im allgemeinen gilt, daß der Anteil der Einschaltzeit (Duty-Cycle) der Pulsweitenmodulation des Motors 106 verlängert wird, um den Motor zu beschleunigen, wenn das Zeitintervall zwischen zwei Impulsen des Kodierers länger als ein Sollintervall ist. Falls das Zeitintervall entsprechend kürzer ist, wird die Einschaltzeit der Pulsweitenmodulation zur Bremsung des Motors 106 verringert. Maximale und minimale Pulsmodulationsweiten können gespeichert werden, um Fehlerbedingungen wie Bandstau oder - fehltransport zu detektieren.

Die Druckkopfsteuerung 105 versorgt den Druckkopf 107 mit den vorbestimmten Bilddaten, die synchron mit den Aufzeichnungssignalen aus dem Pufferspeicher 103 übertragen werden. Der Druckkopf 107 ist ein zeilenförmiger Kopf zur zeilenweisen Aufzeichnung auf dem Bildempfangsband und in der vorliegenden Ausführungsform ein Thermodruckkopf, kann aber auch ein Tintenstrahlaufzeichnungskopf sein.

Ein ROM 108 und ein RAM 109 enthalten die Programme bzw. Daten, die zur Steuerung der CPU 101 erforderlich sind. Die Busleitung 110 verbindet die CPU 101 mit den oben genannten Teilen.

Die jeweilige Druckgeschwindigkeit wird entsprechend den folgenden zwei Bedingungen gesteuert:
Das zum Drucken verfügbare Volumen an Bilddaten; die Zahl der zu aktivierenden Druckelemente des Druckmusters.

Das Verfahren zur Ableitung der erforderlichen Geschwindigkeit für jeden dieser Parameter wird im folgenden beschrieben. Die endgültige, verwendete Geschwindigkeit ist die kleinere der beiden Sollgeschwindigkeiten.

Das Volumen der zum Drucken verfügbaren Bilddaten kann durch Expansions-Routinen bestimmt werden, die Punktdaten (z.B. aus Bezier-Daten) erzeugen und Schriftzeichenattribute (z.B. Fettdruck, Umrißdruck) hinzufügen. Dies ist insbesondere der Fall, wenn das Banddruckgerät 1 eine eigene Anzeigevorrichtung und Tastatur ins Gehäuse des Druckmechanismus integriert hat. Wenn der Drucker an den Host angeschlossen ist, wie in der vorliegenden Ausführungsform, wird die Druckgeschwindigkeit dem Volumen der im Puffer 103 verfügbaren Bilddaten, die vom Host empfangen wurden, angepaßt. Der Grund dafür, daß die Druckgeschwindigkeit des Bandes 4 entsprechend der Anzahl der verfügbaren Bilddaten gesteuert wird, liegt darin, daß zu verhindern ist, daß dem Drucker die verfügbaren Bilddaten ausgehen, so daß er gezwungen ist, die Bewegung des Bandes zu unterbrechen. Es ist wichtig, ein Anhalten des Druckers zu unterbinden, da sonst die Genauigkeit der Druckpositionen verloren geht, was eine schlechte Druckqualität - im Unterschied zu einem Schrittmotor, der angehalten werden kann und die Druckposition aufrecht erhält - zur Folge hat. Um die Notwendigkeit des Anhaltens des Motors 106 und des Druckprozesses zu vermeiden, während auf Bilddaten vom Host H gewartet wird, wird die Druckgeschwindigkeit entsprechend der Anzahl der im Puffer 103 vorhandenen Daten gesteuert.

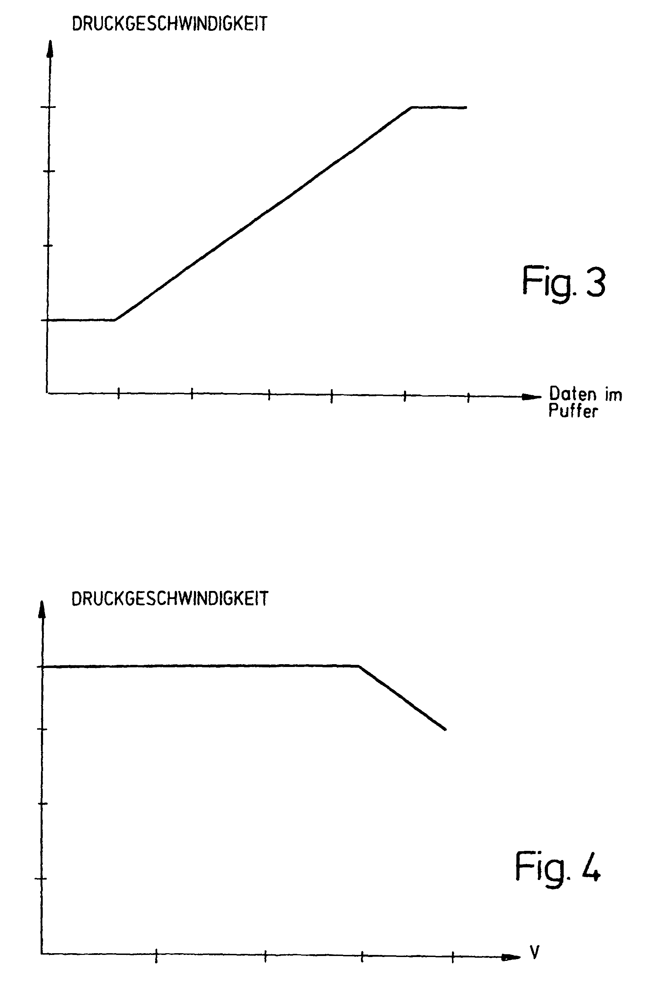

Ein Beispiel für eine Beziehung zwischen Druckgeschwindigkeit und der Menge von Bilddaten im Puffer 103 ist in Figur 3 wiedergegeben. Die im folgenden als Sollgeschwindigkeit bezeichnete Druckgeschwindigkeit ist konstant auf einem relativ niedrigen Niveau, solange die Anzahl der Bilddaten im Puffer 103 unter einer ersten Schwelle liegt. Es ist anzumerken, daß die Geschwindigkeit null ist, wenn überhaupt keine Bilddaten vorliegen. Dasselbe gilt, wenn die Datenübertragung vom Host gerade beginnt: Anfangs wird abgewartet, bis die Anzahl der verfügbaren Bilddaten einen ersten Schwellenwert überschreitet, der der ersten Schwelle entsprechen oder etwas höher liegen kann. Das dient dazu, zu vermeiden, daß das Banddruckgerät 1 anhalten muß, wenn im Falle einer extrem niedrigen Datenübertragungsrate alle verfügbaren Bilddaten gedruckt sind, jedoch noch keine neuen Bilddaten übertragen wurden. Wenn die Anzahl der Bilddaten die genannte erste Schwelle überschreitet, steigt die Sollgeschwindigkeit linear mit der Anzahl der Daten an, bis die Anzahl der Bilddaten eine zweite Schwelle erreicht. Überschreitet die Anzahl der Bilddaten im Puffer 103 diese zweite Schwelle, wird die Sollgeschwindigkeit konstant auf eine maximale Geschwindigkeit gesetzt.

Die zum Drucken einer ganzen Zeile von beispielsweise 192 aktivierten Druckelementen erforderliche Energie erfordert bei maximaler Druckgeschwindigkeit eine stärkere Stromversorgung als bei normalen Druckbedingungen, bei denen nur ein Teil der Druckelemente des Druckkopfs 107 zu aktivieren sind. Eine Begrenzung der Druckgeschwindigkeit für die Bereiche eines Etiketts, in denen ein hoher Schwärzungsgrad erforderlich ist, vermindert die maximal erforderliche Leistung, die von der Stromversorgung zu liefern ist. Da die meisten Etiketten-Designs keine Bereiche hohe Schwärzungsgrades haben, wird die Druckgeschwindigkeit in der Regel nicht zu vermindern sein. Der Schwärzungsgrad V des Etiketts wird unter Verwendung eines exponentiell abklingenden Akkumulators gemessen, der nicht nur die aktivierten Druckelemente des jeweiligen Druckzyklus', sondern auch Daten der vorhergehenden Zeilen berücksichtigt. Die jüngsten Druckzeilen haben eine höhere Gewichtung als ältere. Das Verfahren läßt sich mit der folgenden Gleichung beschreiben:

$$V = A \times B + C,$$

wobei C die Anzahl der im jeweiligen Druckzyklus zu aktivierenden Druckelemente und B der Wert V des vorhergehenden Druckzyklus ist. Der Schwärzungsgrad V ist der zur Steuerung der Geschwindigkeit des Motors 106 verwendete Wert. Der Faktor A repräsentiert eine 'Zeitkonstante', dh. einen Wert, der die von den Druckelementen zum Abkühlen nach einer Aktivierung benötigte Zeit wiedergibt und zwischen 0 und 1 liegt. Ein hoher Wert für A bedeutet, daß Daten vorhergehender Zyklen eine höhere Gewichtung für den jeweiligen Schwärzungsgrad haben. Ein niedriger Wert für A bedeutet, daß vorhergehende Druckzyklen eine geringere Auswirkung auf den gegenwärtigen Schwärzungsgrad haben.

Entsprechend der Figur 4, in der die Beziehung zwischen dem Wert V und der Sollgeschwindigkeit anhand eines Beispiels dargestellt ist, wird die ansonsten konstante Sollgeschwindigkeit gegenüber ihrem Maximalwert vermindert, sobald der Schwärzungsgrad V einen festgelegten Schwellenwert überschreitet. Da der Schwärzungsgrad weiter in Richtung auf einen Grad kompletter Schwärzung zu ansteigt (dh. zu einer Schwärzung der gesamten Druckzeile), wird die Sollgeschwindigkeit bei gegenüber dem Schwellenwert ansteigendem Schwärzungsgrad linear reduziert.

**Patentansprüche**

1. Banddruckgerät (1) zum Drucken von Bilddaten auf ein Band (4), umfassend:

    Speichermittel (103) zum Speichern von auf das Band (4) auszudruckenden Bilddaten;
    Aufzeichnungsmittel (107) mit Druckelementen zum punktweisen Aufzeichnen der Bilddaten auf das Band (4) in aufeinanderfolgenden Druckzyklen;
    eine Antriebseinrichtung (106) zum Fördern des Bandes (4) an den Aufzeichnungsmitteln (107) entlang;
    Mittel zur Bestimmung der Anzahl der in den jeweiligen Druckzyklen zu aktivierenden Druckelemente der Aufzeichnungsmittel (107); und
    Geschwindigkeitsanpassungsmittel zur Steuerung der Geschwindigkeit der Antriebseinrichtung (106) in Abhängigkeit von der Menge der in den Speichermitteln (103) gespeicherten Bilddaten,

    **dadurch gekennzeichnet, dass**
    die Geschwindigkeitsanpassungsmittel auch zur Steuerung der Geschwindigkeit der Antriebseinrichtung (106) in Abhängigkeit von der Anzahl der in dem jeweiligen Druckzyklus zu aktivierenden Druckelemente vorgesehen sind.

2. Banddruckgerät nach Anspruch 1, wobei die Geschwindigkeitsanpassungsmittel eine erste Sollgeschwindigkeit, die von der Anzahl der in den Speichermitteln (103) gespeicherten Bilddaten abhängt, sowie eine zweite Sollgeschwindigkeit, die von der Anzahl der im jeweiligen Druckzyklus zu aktivierenden Druckelemente abhängt, bestimmen, wobei die Geschwindigkeit der Antriebseinrichtung (106) so gesteuert wird, daß sie der niedrigeren der beiden Sollgeschwindigkeiten entspricht.

3. Banddruckgerät nach Anspruch 2, wobei die erste Sollgeschwindigkeit durch die Geschwindigkeitsanpassungsmittel so angepasst wird, dass die erste Sollgeschwindigkeit niedriger als eine Maximalgeschwindigkeit ist, wenn die Anzahl der in den Speichermitteln (103) gespeicherten Bilddaten unterhalb einer festgelegten Schwelle liegt.

4. Banddruckgerät nach Anspruch 3, wobei die erste Sollgeschwindigkeit konstant ist, wenn die Anzahl der Bilddaten in den Speichermitteln (103) unter einer ersten Schwelle liegt.

5. Banddruckgerät nach Anspruch 3 oder 4, wobei die erste-Sollgeschwindigkeit unabhängig von der tatsächlichen Anzahl der Bilddaten in den Speichermitteln (103) die Maximalgeschwindigkeit annimmt, wenn die Anzahl der Bilddaten in den Speichermitteln (103) eine zweite Schwelle überschreitet, deren Wert den Wert der ersten Schwelle übersteigt.

6. Banddruckgerät nach Anspruch 5, wobei die erste Sollgeschwindigkeit linear mit der Anzahl der Bilddaten in den Speichermitteln (103) ansteigt, wenn die Anzahl der Bilddaten die erste Schwelle überschreitet und die zweite Schwelle unterschreitet.

7. Banddruckgerät nach einem der Ansprüche 2 bis 6, wobei die Geschwindigkeitsanpassungsmittel die zweite Sollgeschwindigkeit in Abhängigkeit von der Zahl der zu aktivierenden Druckelemente in dem vorhergehenden Druckzyklus oder den vorhergehenden Druckzyklen bestimmen.

8. Banddruckgerät nach Anspruch 7, wobei die ansonsten konstante zweite Sollgeschwindigkeit linear gegenüber einer Maximalgeschwindigkeit in Abhängigkeit von einem Wert V reduziert wird, wenn der Wert V eine festgelegte dritte Schwelle überschreitet, wobei der Wert V nach der Gleichung

$$V = A \times B + C$$

berechnet wird, wobei C die Anzahl der im jeweiligen Druckzyklus zu aktivierenden Druckelemente ist und B der Wert V des vorhergehenden Druckzyklus ist und A zwischen 0 und 1 liegt.

9. Banddruckgerät nach einem der Ansprüche 1 bis 8, mit Mitteln zur Steuerung der den Druckelementen in den jeweiligen Druckzyklen zugeführten Energie in Abhängigkeit von der Geschwindigkeit der Antriebseinrichtung (106).

10. Banddruckgerät nach einem der Ansprüche 1 bis 9, wobei die Aufzeichnungsmittel (107) einen Thermodruckkopf umfassen.

11. Banddruckgerät nach einem der Ansprüche 1 bis 10, mit einer an einem Host anschließbaren Schnittstelle.

12. Banddruckgerät nach Anspruch 11, wobei die Geschwindigkeitsanpassungs mittel die Antriebseinrichtung (106) nach dem Beginn einer Übertragung von Daten vom Host solange nicht in Betrieb setzen, bis die Anzahl der Bilddaten in den Speichermitteln (103) einen festgelegten Schwellenwert überschreitet.

13. Banddruckgerät nach Anspruch 11 oder 12, mit Mitteln zum Anschalten der Stromversorgung des Banddruckgeräts als Antwort auf ankommende Daten vom Host.

14. Banddruckgerät nach einem der Ansprüche 1 bis 13, umfassend Mittel zur Detektion der Bewegung des Bandes (14) und/oder eines Farbbandes (12), wobei eine Fehlermeldung auf einer Anzeige wiedergegeben und/oder an den Host gesandt wird, wenn ein Fehler in der Bewegung des Bandes (14) und/oder des Farbbandes (12) durch die Mittel zur Detektion der Bewegung detektiert wird.

15. Banddruckgerät nach Anspruch 14, wobei die Mittel zur Detektion der Bewegung des Bandes (14) und/oder des Farbbandes (12) einen Mikroschalter umfassen, der mit einem Nocken wechselwirkt, der operativ mit einer Bandabwickelspule oder einer Farbbandabwickelspule (30) oder einer Farbbandaufwickelspule (32) verbunden ist.

**Claims**

1. A tape printer (1) for printing image data onto a tape (4), comprising:

    memory means (103) for storing image data to be printed out onto the tape (4);
    recording means (107) having printing elements for the dot-by-dot recording of the image data onto the tape (4) in consecutive printing cycles;
    a drive mechanism (106) for conveying the tape (4) along the recording means (107);
    means for determining the number of printing elements of the recording means (107) to be activated in the respective printing cycles, and speed adjustment means for controlling the speed of the drive mechanism (106) as a function of the quantity of image data stored in the memory means (103),

    **characterised in that** the speed adjustment means are also provided to control the speed of the drive mechanism (106) as a function of the number of printing elements to be activated in the respective printing cycle.

2. A tape printer according to Claim 1, wherein the speed adjustment means determine a first set speed that depends on the number of items of image data stored in the memory means (103), and also a second set speed that depends on the number of the printing elements to be activated in the respective printing cycle, wherein the speed of the drive mechanism (106) is controlled so that it corresponds to the lower of the two set speeds.

3. A tape printer according to Claim 2, wherein the first set speed is adjusted by the speed adjustment means so that the first set speed is lower than a maximum speed when the number of items of image data stored in the memory means (103) is beneath a fixed threshold.

4. A tape printer according to Claim 3, wherein the first set speed is constant when the number of the items of image data in the memory means (103) lies beneath a first threshold.

5. A tape printer according to Claim 3 or 4, wherein the first set speed assumes the maximum speed independently of the number of the actual number of items of image data in the memory means (103) if the number of items of image data in the memory means (103) exceeds a second threshold, the value of which exceeds the value of the first threshold.

6. A tape printer according to Claim 5, wherein the first set speed increases linearly with the number of items of image data in the memory means (103) when the number of items of image data exceeds the first threshold and falls below the second threshold.

7. A tape printer according to one of Claims 2 to 6, wherein the speed adjustment means determine the second set speed as a function of the number of printing elements to be activated in the preceding printing cycle or cycles.

8. A tape printer according to Claim 7, wherein the otherwise constant second set speed is reduced linearly in comparison with a maximum speed as a function of a value V when the value V exceeds a fixed third threshold, wherein the value V is calculated in accordance with the equation

$$V = A \times B + C,$$

wherein C is the number of printing elements to be activated in the respective printing cycle and B is the value V of the preceding printing cycle and A is between 0 and 1.

9. A tape printer according to one of Claims 1 to 8, having means for controlling the energy supplied to the printing elements in the respective printing cycles as a function of the speed of the drive mechanism (106).

10. A tape printer according to one of Claims 1 to 9, wherein the recording means (107) comprise a thermal print head.

11. A tape printer according to one of Claims 1 to 10, having an interface that can be connected to a host.

12. A tape printer according to Claim 11, wherein the speed adjustment means do not set the drive mechanism (106) in operation after the start of a transfer of data from the host until the number of items of image data in the memory means (103) exceeds a fixed threshold value.

13. A tape printer according to Claim 11 or 12, having means for switching on the power supply of the tape printer as a reply to incoming data from the host.

14. A tape printer according to one of Claims 1 to 13, comprising means for the detection of the movement of the tape (14) and/or of a printer ribbon (12), wherein an error message is reproduced on a display and/or is sent to the host if an error is detected in the movement of the tape (14) and/or of the printer ribbon (12) by the means for the detection of the movement.

15. A tape printer according to Claim 14, wherein the means for detecting the movement of the tape (14) and/or of the printer ribbon (12) comprise a microswitch that interacts with a cam, which is operatively connected to a tape take-off reel or a printer ribbon take-off reel (30) or a printer ribbon take-up reel (32).

**Revendications**

1. Imprimante de rubans (1) pour l'impression de données d'image sur un ruban (4), comprenant :

   des moyens de mémoire (103) pour l'enregistrement des données d'image à imprimer sur le ruban (4) ;
   des moyens d'enregistrement (107) avec des éléments d'impression pour le dessin par points des données d'image sur le ruban (4) dans des cycles d'impression consécutifs ;
   un dispositif d'entraînement (106) pour le transport du ruban (4) le long du moyen d'enregistrement (107) ;
   un moyen pour la détermination du nombre d'éléments d'impression du moyen d'enregistrement (107) à activer dans les cycles d'impression respectifs, et
   des moyens d'adaptation de la vitesse pour le contrôle de la vitesse du dispositif d'entraînement (106) en fonction de la quantité de données d'image enregistrées dans les moyens de mémoire (103),

   **caractérisée en ce que**
   les moyens d'adaptation de la vitesse sont également prévus pour le contrôle de la vitesse du dispositif d'entraînement (106) en fonction du nombre d'éléments d'impression à activer dans les cycles d'impression respectifs.

2. Imprimante de rubans selon la revendication 1, où les moyens d'adaptation de la vitesse déterminent une première vitesse théorique qui dépend du nombre de données d'image enregistrées dans les moyens de mémoire (103), ainsi qu'une seconde vitesse théorique qui dépend du nombre d'éléments d'impression à activer dans les cycles d'impression respectifs, sachant que la vitesse du dispositif d'entraînement (106) est contrôlée de telle sorte qu'elle corresponde à la vitesse théorique la plus basse des deux.

3. Imprimante de rubans selon la revendication 2, la première vitesse théorique étant adaptée par les moyens d'adaptation de la vitesse de telle sorte que la première vitesse théorique soit inférieure à une vitesse maximale lorsque le nombre de données d'image enregistrées dans les moyens de mémoire (103) est inférieur à un seuil défini.

4. Imprimante de rubans selon la revendication 3, où la première vitesse théorique est constante lorsque le nombre de données d'image dans les moyens de mémoire (103) est inférieur à un premier seuil.

5. Imprimante de rubans selon la revendication 3 ou 4, où la première vitesse théorique atteint la vitesse maximale indépendamment du nombre effectif de données d'image dans les moyens de mémoire (103) lorsque le nombre de données d'image dans les moyens de:mémoire (103) dépasse un deuxième seuil dont la valeur est supérieure à la valeur du premier seuil.

6. Imprimante de rubans selon la revendication 5, où la première vitesse théorique augmente de façon linéaire avec le nombre de données d'image dans les moyens de mémoire (103) lorsque le nombre de données d'image dépasse le premier seuil et reste inférieur au deuxième seuil.

7. Imprimante de rubans selon l'une quelconque des revendications 2 à 6, où les moyens d'adaptation de la vitesse déterminent la seconde vitesse théorique en fonction du nombre d'éléments d'impression à activer dans le/les cycle(s) d'impression précédentes).

8. Imprimante de rubans selon la revendication 7, où la seconde vitesse théorique autrement constante est réduite de façon linéaire par rapport à une vitesse maximale en fonction d'une valeur V lorsque la valeur V dépasse un troisième seuil défini, sachant que la valeur V est calculée selon l'équation

$$V = A \times B + C$$

C étant le nombre d'éléments d'impression à activer dans les cycles d'impression respectifs, B étant la valeur V du cycle d'impression précédent et A étant compris entre 0 et 1.

9. Imprimante de rubans selon l'une quelconque des revendications 1 à 8, avec des moyens pour le contrôle de l'énergie alimentant les éléments d'impression dans les cycles d'impression respectifs en fonction de la vitesse du dispositif d'entraînement (106).

10. Imprimante de rubans selon l'une quelconque des revendications 1 à 9, les moyens d'enregistrement (107) comprenant une tête d'impression thermique.

11. Imprimante de rubans selon l'une quelconque des revendications 1 à 10, avec une interface connectable à un hôte.

12. Imprimante de rubans selon la revendication 11, où les moyens d'adaptation de la vitesse n'activent plus le dispositif d'entraînement (106) après le début d'une transmission de données par l'hôte tant que le nombre de données d'image dans les moyens de mémoire (103) dépasse une valeur seuil définie.

13. Imprimante de rubans selon la revendication 11 ou 12, avec des moyens pour la mise en marche de l'alimentation électrique de l'imprimante de rubans en réponse aux données en entrée en provenance de l'hôte.

14. Imprimante de rubans selon. l'une quelconque des revendications 1 à 13, comprenant des moyens de détection du mouvement du ruban (14) et/ou d'un ruban encreur (12), sachant qu'un message d'erreur apparaît sur un écran et/ou est envoyé à l'hôte lorsqu'une erreur au niveau du mouvement du ruban (14) et/ou du ruban encreur (12) est détectée par les moyens de détection du mouvement.

15. Imprimante de rubans selon la revendication 14, où les moyens de détection du mouvement du ruban (14) et/ou du ruban encreur (12) comprennent un microrupteur qui interagit avec une came reliée de façon opérationnelle à une bobine de déroulement de ruban ou une bobine de déroulement de ruban encreur (30) ou à une bobine d'enroulement de ruban encreur (32).

EP 0 820 033 B1

Fig. 1

Fig. 2

DRUCKGESCHWINDIGKEIT

Fig. 3

Daten im
Puffer

DRUCKGESCHWINDIGKEIT

Fig. 4

V